# EUROPÄISCHE PATENTANMELDUNG

(11) **EP 0 884 166 A2**
(43) Veröffentlichungstag der Anmeldung: **16.12.1998**
(21) Anmeldenummer: 98109995.5
(22) Anmeldetag: 02.06.1998
(51) Int. Cl.: B29D 30/06

(54) **Vorrichtung und Verfahren zum Vulkanisieren eines wulstlosen Fahrzeugluftreifens**

(30) Priorität: 12.06.1997 DE 19724746
(71) Anmelder: Continental Aktiengesellschaft, 30165 Hannover (DE)
(72) Erfinder: Knopp, Roland, 30175 Hannover (DE); Schroeder, Martin, 30165 Hannover (DE)

(57) **Zusammenfassung**

Um bei der Herstellung eines integrierten Rades, bestehend aus einem wulstlosen Fahrzeugluftreifen (22) aus Gummi oder gummiähnlichen Stoffen und einer nicht aus Gummi bestehenden Felge (28) eine sichere Verbindung zwischen den Seitenwänden (24, 26) des Reifens und den Randflächen (34, 36) der Felge (28) durch Anvulkanisieren zu gewährleisten, wird eine Vulkanisierform (10) vorgeschlagen, bei der angrenzend an je einen seitlichen Überlappungsbereich (L, R) von Seitenflächen (24, 26) des Reifens und Randflächen (34, 36) der Felge zumindest je ein Heiz- oder Druckbalg (38) angeordnet ist, die jeweils mit Mitteln (40) zur Druckbeaufschlagung durch ein Fluid verbunden sind.

## Beschreibung

Die Erfindung betrifft eine Vorrichtung zum Vulkanisieren eines wulstlosen Fahrzeugluftreifens aus Gummi oder gummiähnlichen Stoffen und zum gleichzeitigen Verbinden mit einer nicht aus Gummi bestehenden Felge eines Fahrzeugrades mit einer die Reifenkontur festlegenden teilbaren Form, die die Felge ganz oder teilweise aufnimmt.

Die Erfindung betrifft weiterhin ein Verfahren zum Vulkanisieren eines wulstlosen Fahrzeugluftreifens aus Gummi oder gummiähnlichen Stoffen und zum gleichzeitigen Verbinden mit einer nicht aus Gummi bestehenden Felge eines Fahrzeugrades, bei dem der Innenraum des Reifens durch die Felge hindurch zur Vulkanisation mit einem unter Druck stehenden Wärmeträgerfluid beaufschlagt wird.

Herkömmliche Fahrzeugluftreifen weisen zwei Wulstkerne auf, mit denen sie auf einer Felge radial außen befestigt werden. Die Herstellung solcher Fahrzeugluftreifen mit Kernwulsten ist sehr aufwendig und materialintensiv. Ein gesamtes Fahrzeugrad, bestehend aus Felge und Luftreifen, ist darüber hinaus vergleichsweise schwer, woran auch die üblicherweise mit Stahldrahteinlagen hergestellten Wulstkerne beteiligt sind.

Um eine Montage solcher mit Wülsten ausgestatteten Reifen zu ermöglichen, werden die zugehörigen Felgen üblicherweise mit Tiefbett ausgebildet. Die fertig vulkanisierten Reifen werden üblicherweise ohne Felge transportiert. Um den Montageaufwand zu reduzieren und um leichtere Fahrzeugräder realisieren zu können, sind Fahrzeugräder vorgeschlagen worden, bei denen der Luftreifen Seitenwände aufweist, die eine ein- oder mehrteilige Felge umgreifen, so daß Überlappungsbereiche entstehen. In den Überlappungsbereichen wird das Gummimaterial durch Vulkanisation mit der üblicherweise nicht aus Gummi bestehenden Felge verbunden. Dabei ist offensichtlich, daß eine solche Verbindung wegen der vom Reifen in die Felge eingeleiteten Kräfte und wegen der von der Felge auf den Reifen zu übertragenden Antriebsmomentes hohen Anforderungen ausgesetzt ist.

Während der Fahrzeugluftreifen üblicherweise aus Gummi oder gummiähnlichen Stoffen besteht, um die für den Fahrbahn/Reifen-Kontakt notwendigen Eigenschaften zu gewährleisten, besteht die Felge üblicherweise aus Materialien, die nach anderen Gesichtspunkten ausgewählt sind und zu denen beispielsweise bei konventionellen Felgen Stahlblech gehört, und wobei mit alternativen Werkstoffen, wie Aluminium, Magnesium und diversen faserverstärkten Kunststoffen, experimentiert wird.

Ein Fahrzeugrad mit wulstlosen Fahrzeugluftreifen ist beispielsweise aus der DE-PS 195 30 939 bekannt. In dieser Druckschrift ist ein Fahrzeugrad offenbart, bei dem der Fahrzeugluftreifen mit seinen Endbereichen der Seitenflächen an die zylindrische Oberfläche einer Felge fest anvulkanisiert ist.

Ein ähnliches Fahrzeugrad ist aus der ebenfalls auf die Anmelderin zurückgehenden EP 0 722 853 A2 bekannt. In dieser Druckschrift wird auch ein Herstellungsverfahren offenbart, bei dem ein Fahrzeugradrohling, bestehend aus einer Felge und einem auszuvulkanisierenden Reifenrohling aus Gummi, in einer Vulkanisationsform ausvulkanisiert wird. Dabei wird zum Aufbau eines den Reifenrohling an die Innenseite der Vulkanisierform pressenden Innendruckes Heißdampf verwendet, der durch eine oder mehrere Öffnungen in der Felge über Anschlußschläuche in den Torus des Fahrzeugradrohlings geleitet wird.

Während das reine Ausvulkanisieren von Gummi eines Reifenrohlings durch Druckbeaufschlagung und Einbringen von Wärme, sei es durch ein Wärmeträgerfluid, sei es durch eine beheizte Vulkanisierform, bekannt und beherrschbar ist, ist das für ein erfindungsgemäßes Fahrzeugrad besonders wichtige Verbinden der aus Gummi bestehenden Seitenflächen des Fahrzeugluftreifens mit den entsprechenden, nicht aus Gummi bestehenden Randflächen der Felge, d.h. das Aufvulkanisieren, schwierig.

In dem Überlappungsbereich zwischen Seitenfläche des Reifens und Randfläche der Felge wird der notwendige Anpreßdruck bislang dadurch erzeugt, daß eine gewisse Übermenge an Gummi in die Form eingebracht wird. Die notwendige Wärmezufuhr wird durch sehr groß dimensionierte Heizvorrichtungen erzeugt, wobei die gute Wärmeleitfähigkeit der aus statischen Gründen massiv konstruierten Vulkanisierform dazu führt, daß ein Großteil der von den Heizvorrichtungen erzeugten Wärme nicht direkt in den als Verbindungsbereich fungierenden Überlappungsbereich eingetragen wird.

Der Erfindung liegt daher die Aufgabe zugrunde, eine Vulkanisierform der gattungsgemäßen Art so weiter zu entwickeln, daß sich bei Fahrzeugrädern der geschilderten Art bei minimierten Einsatz von Material und Energie eine sichere Verbindung zwischen den aus Gummi bestehenden Seitenflächen des Fahrzeugluftreifens und den nicht aus Gummi bestehenden Randflächen der Felge erzeugen läßt.

Der Erfindung liegt hinsichtlich des verfahrensmäßigen Teils weiterhin die Aufgabe zugrunde, ein gattungsgemäßes Verfahren so zu verbessern, daß unter Verwendung einer erfindungsgemäßen Vorrichtung eine sichere Anvulkanisation der Seitenflächen des Fahrzeugluftreifens an die Felge ermöglicht wird.

Die Lösung ist hinsichtlich ihres vorrichtungsmäßigen Teils bei einer gattungsgemäßen Vulkanisierform dadurch gekennzeichnet, daß angrenzend an je einen seitlichen Überlappungsbereich von Seitenflächen des Reifens und Randflächen der Felge zumindest je ein Druckbalg angeordnet ist, die jeweils mit Mitteln zur Druckbeaufschlagung durch ein Fluid verbunden sind. Dabei ist bevorzugt vorgesehen, die Druckbälge gleichzeitig als Heizbälge auszubilden, so daß zur Druckbeaufschlagung ein Wärmeträgerfluid verwendet werden kann, so daß neben einer Druckbeaufschlagung ein Wärmeeintrag verfahrenstechnisch einfach realisierbar ist. Dabei wird als Wärmeträgerfluid bevorzugt Heißdampf verwendet.

Hinsichtlich ihres verfahrensmäßigen Teils ist die Lösung bei einem gattungsgemäßen Verfahren dadurch gekennzeichnet, daß folgende Schritte nacheinander ausgeführt werden:
- Beaufschlagen des Innenraums (32) des Reifens in einem ersten Schritt durch die Felge (28) hindurch mit einem Innendruck zum Ausrichten des Reifenrohlings gegen die Form,
- Schließen einer die Form aufnehmenden Presse,
- Druckbeaufschlagung der Überlappungsbereiche (L, R) der Seitenflächen (24, 26) des Reifens (22) mittels Heizbälgen (38), wodurch die Überlappungsbereiche direkt oder indirekt unter Wärmeübergang an die Randflächen (34, 36) der Felge (28) gedrückt werden,
- Beaufschlagen des Innenraums (32) des Reifens durch die Felge (28) hindurch mit einem unter Druck stehenden Wärmeträgerfluid zur Vulkanisation.

Indem in einem ersten Schritt zunächst der Innenraum des Reifens mit vergleichsweise geringem Druck beaufschlagt wird, wird die Felge zunächst zentrierend gegen die zugeordnete Innenseite der Vulkanisierform gepreßt, wobei die Randflächen der Felge dichtend an den Seitenflächen des Reifenrohlings zur Anlage kommen.

Sodann erfolgt eine Abdichtung nach Schließen der Presse durch Einleiten von vorzugsweise Heißdampf in die Druck- und Heizbälge, so daß die Überlappungsbereiche von Seitenflächen des Reifens und Randflächen der Felge dichtend aufeinander gepreßt werden. Sodann kann der Innenraum des Reifens - vorzugsweise mittels Heißdampf - mit dem zur Ausvulkanisation nötigen, im Vergleich zum ersten Schritt höheren Druck beaufschlagt werden, wobei der vergleichsweise höhere Druck in den Druck- und Heizbälgen zu einer guten Dichtwirkung und zu einer festen verbindenden Vulkanisation zwischen Reifen und Felge führt.

Durch die Anordnung der Heizbälge in unmittelbarer Nachbarschaft der zu verbindenden Flächen bzw. an der Seitenfläche des Luftreifens anliegend, sind die Transportwege für die einzubringende Wärme kurz, so daß die Wärme energetisch effizient unmittelbar in den Verbindungsbereich geleitet werden kann.

Bei der erfindungsgemäßen Vulkanisierform ist insbesondere vorgesehen, daß auf der dem jeweiligen Überlappungsbereich der Seitenfläche des Reifens zugewandten Seite des oder der Heizbälge ein Ausgleichsring schwimmend gelagert ist. Dieser Ausgleichsring bewirkt eine Verteilung überschüssigen Gummis und trägt so zu einem optisch ansprechenden äußeren Erscheinungsbild der Außenflanke des Reifens bei.

Die Erfindung wird im folgenden anhand eines in der Zeichnung dargestellten Ausführungsbeispieles näher erläutert. In der Zeichnung zeigen:
- Figur 1 -: einen Querschnitt durch eine erfindungsgemäße Vulkanisierform, und
- Figur 2 -: eine alternative Ausführungsform mit zusätzlichen Ausgleichsringen.

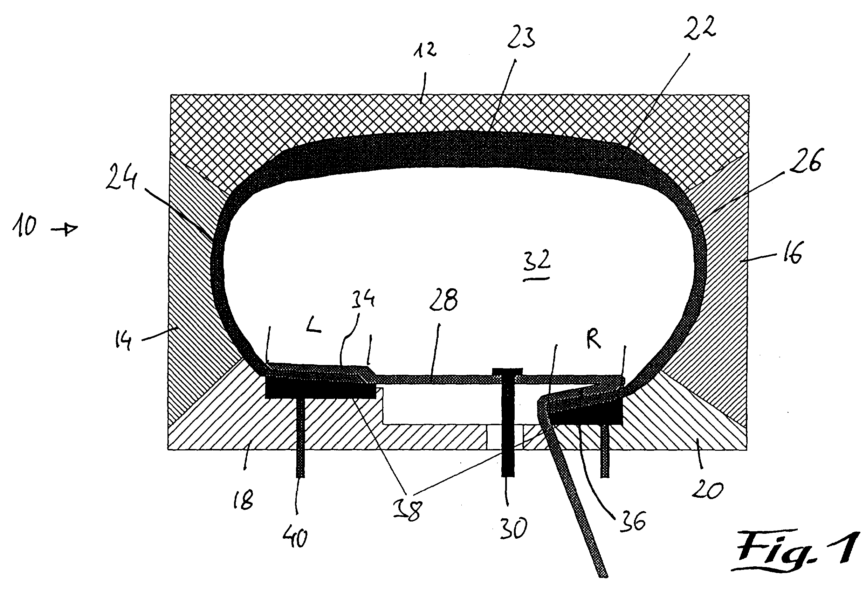

Figur 1 zeigt eine erfindungsgemäße Vulkanisierform 10, die aus entnehmbaren Teilen 12, 14, 16, 18 und 20 zusammengesetzt ist. In die Vulkanisierform ist ein Reifenrohling 22 eingelegt, mit einem Laufstreifen 23 und zwei Flanken oder Seitenflächen 24 und 26. Eine ein- oder mehrteilige Felge 28 ist so in der Vulkanisierform 10 angeordnet, daß zwischen den beiden Teilen 18 und 20 eine dichtende Verbindung geschaffen wird. Ein Ventil 30 führt durch die Felge 28 zum Innenraum 32 der Vulkanisierform 10.

Zwei Randflächen 34 und 36 überlappen sich mit den Seitenflächen 24 und 26 des Reifenrohlings 22 und bilden als Verbindungsbereiche dienende Überlappungsbereiche L und R.

Zum Ausvulkanisieren des Reifenrohlings 22 und zum Anvulkanisieren der Reifenseitenwände (Flanken, Seitenflächen) 24 und 26 an die Felge 28 wird in einem ersten Schritt durch das Ventil 30 durch die Felge 28 hindurch Heißdampf vergleichsweise geringen Drucks in den Innenraum 32 der Vulkanisierform 10 gebracht. Der heiße Dampf bewirkt einen Wärmeübergang in den Reifenrohling 22. Gleichzeitig wird die Felge 28 dichtend gegen die Innenwandung der Vulkanisierform 10 gepreßt. Die Randflächen 34 und 36 kommen an den entsprechenden Überlappungsbereichen L und R der Seitenflächen 24 und 26 dichtend zur Anlage.

Um einen gezielten Wärmeeintrag zu ermöglichen, sind bei einer Ausführungsform gemäß Figur 1 zwei Heizbälge 38 vorgesehen, die in einem zweiten Schritt zusätzlich mit Heißdampf hohen Drucks beaufschlagt werden. Die Heizbälge können im wesentlichen kreisringförmig ausgebildet sein, oder jeweils aus mehreren einzelnen Heizbälgen bestehen. Jeder Heizbalg 38 weist eine Heißdampfleitung 40 zur Versorgung mit Heißdampf auf.

Weiterhin sorgt der in den Heizbälgen 38 aufgebaute Druck sowie ihre Elastizität dafür, daß die Überlappungsbereiche L und R der Seitenflächen 24 und 26 gleichmäßig gegen die Randflächen 34 und 36 der Felge 28 gedrückt werden. Bei einem Andrücken durch den im Innenraum 32 vorherrschenden Heißdampfdruck alleine könnte es sonst zu Ungleichmäßigkeiten in der Druckverteilung kommen, da die Felge 28 vergleichsweise starr ist.

Nachdem es aufgrund des in die Druckbälge 38 eingeleiteten Druckes zu einer festen Anlage und somit guten Dichtwirkung zwischen den Seitenflächen 24 und 26 des Reifens und den Randflächen 34 und 36 der Felge gekommen ist, kann in einem weiteren Schritt der Innenraum 32 des Reifenrohlings 22 mit vergleichsweise hohem Druck beaufschlagt werden, so daß der Reifenrohling ausvulkanisieren kann.

Bei beiden Ausführungsformen können entweder die Oberfläche der Druck- oder Heizbälge 38 oder die Oberfläche der Ausgleichsringe 46 durch entsprechende Formgebung dazu beitragen, Lufteinschlüsse im Verbindungsbereich L oder R zwischen den Seitenflächen 24 und 26 des Reifens 22 und den entsprechenden Randflächen 34 und 36 der Felge 28 entgegen zu wirken.

Durch geschickte Druckführung das die Druck- oder Heizbälge beaufschlagenden Druckfluids oder Wärmeträgerfluids kann immer erreicht werden, daß das Eindringen von Heizmedium, beispielsweise Heißdampf, aus dem Reifeninneren 32 in die Überlappungsbereiche L oder R, und damit eine Verschlechterung der Verbindung zwischen Reifen und Felge vermieden wird.

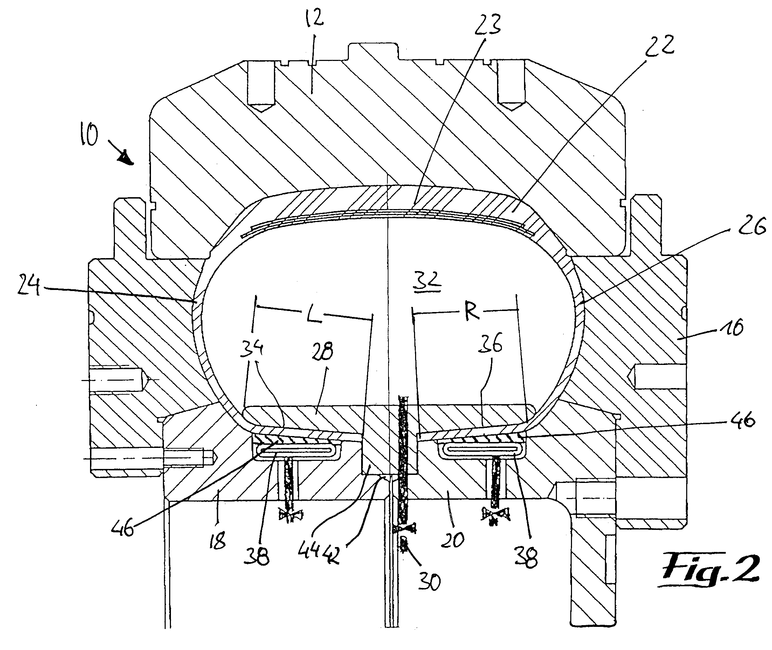

Bei der in Figur 2 gezeigten Ausführungsform weist die zu verarbeitende Felge 28 eine alternative Form auf und ist im Querschnitt annäherungsweise V-förmig mit symmetrisch zueinander angeordneten Randflächen 34 und 36.

Beim Einleiten eines Druckes in den Innenraum 32 wird durch die angestellten Randflächen 34 und 36 eine Zentrierwirkung auf die Felge 28 ausgeübt. Alternativ kann zwischen den Teilen 18 und 20 der Vulkanisierform eine Zentriernut 42 ausgebildet sein, die einen Ansatz 44 der Felge 28 zentrierend aufnimmt.

Bei der in Figur 2 gezeigten Ausführungsform sind zusätzlich schwimmend gelagerte Ausgleichsringe 46 vorgesehen, die bei einem Überschuß an Gummi in den Überlappungs- bzw. Verbindungsbereichen L und R vergleichmäßigend wirken.

### Bezugszeichenliste

- 10: Vulkanisierform
- 12: Teilsegment (von 10)
- 14: Teilsegment (von 10)
- 16: Teilsegment (von 10)
- 18: Teilsegment (von 10)
- 20: Teilsegment (von 10)
- 22: Reifenrohling
- 23: Laufstreifen
- 24, 26: Seitenfläche (Seitenwand, Flanke)
- 28: Felge
- 30: Ventil
- 32: Innenraum
- 34, 36: Randflächen (von 28)
- 38: Heizbälge
- 40: Heißdampfleitung
- 42: Zentriernut
- 44: Ansatz
- 46: Ausgleichsringe
- L, R: Überlappungsbereiche

## Patentansprüche

1. Vulkanisierform zum Vulkanisieren eines wulstlosen Fahrzeugluftreifens (22) aus Gummi oder gummiähnlichen Stoffen und zum gleichzeitigem Verbinden mit einer nicht aus Gummi bestehenden Felge (28) eines Fahrzeugrades, mit einer die Reifenkontur festlegenden teilbaren Form (10), die die Felge ganz oder teilweise aufnimmt, **dadurch gekennzeichnet**, daß angrenzend an je einen seitlichen Überlappungsbereich (L, R) von Seitenflächen (24, 26) des Reifens und Randflächen (34, 36) der Felge zumindest je ein Druckbalg (38) angeordnet ist, die jeweils mit Mitteln (40) zur Druckbeaufschlagung durch ein Fluid verbunden sind.

2. Vulkanisierform nach Anspruch 1, **dadurch gekennzeichnet**, daß die Druckbälge (38) als Heizbälge ausgebildet und zur Aufnahme eines Wärmeträgerfluids vorgesehen sind.

3. Vulkanisierform nach einem der vorhergehenden Ansprüche, **dadurch gekennzeichnet**, daß die Druckbälge (38) im wesentlichen ringförmig ausgebildet sind und einen Querschnitt aufweisen, der der Kontur des als Verbindungsbereich genutzten Überlappungsbereichs (L, R) der Seitenfläche (24, 26) des Reifens (22) angepaßt ist.

4. Vulkanisierform nach einem der vorhergehenden Ansprüche, **dadurch gekennzeichnet**, daß auf der dem jeweiligen Überlappungsbereich (L, R) der Seitenfläche (24, 26) des Reifens zugewandten Seite des oder der Heizbälge (38) ein Ausgleichsring (46) schwimmend gelagert ist.

5. Vulkanisierform nach einem der vorhergehenden Ansprüche, **gekennzeichnet durch** eine Zentriernut (42) zur Aufnahme eines Ansatzes (44) der Felge.

6. Vulkanisierform nach einem oder mehreren der vorhergehenden Ansprüche, **dadurch gekennzeichnet**, daß die Ausrichtung der Anlageflächen der Druckbälge (38) und/oder der Ausgleichringe (46) in bezug auf den Querschnitt der Felge (28) so gewählt sind, daß bei in den Reifen (22) geleitetem Innendruck eines Wärmeträgerfluids eine Zentrierwirkung auf den gegen die Form (10) gepreßte Felge (28) ausgeübt wird.

7. Verfahren zum Vulkanisieren eines wulstlosen Fahrzeugluftreifens (22) aus Gummi oder gummiähnlichen Stoffen und zum gleichzeitigem Verbinden mit einer nicht aus Gummi bestehenden Felge (28) eines Fahrzeugrades, **gekennzeichnet durch** folgende Schritte:
- Beaufschlagen des Innenraums (32) des Reifens in einem ersten Schritt durch die Felge (28) hindurch mit einem Innendruck zum Ausrichten des Reifenrohlings gegen die Form,
- Schließen einer die Form aufnehmenden Presse,
- Druckbeaufschlagung der Überlappungsbereiche (L, R) der Seitenflächen (24, 26) des Reifens (22) mittels Heizbälgen (38), wodurch die Überlappungsbereiche direkt oder indirekt unter Wärmeübergang an die Randflächen (34, 36) der Felge (28) gedrückt werden,
- Beaufschlagen des Innenraums (32) des Reifens durch die Felge (28) hindurch mit einem unter Druck stehenden Wärmeträgerfluid zur Vulkanisation.

8. Verfahren nach Anspruch 7, **dadurch gekennzeichnet**, daß als Wärmeträgerfluid Heißdampf verwendet wird.
